# EUROPÄISCHE PATENTSCHRIFT

(11) **EP 4 037 950 B1**
(45) Veröffentlichungstag und Bekanntmachung des Hinweises auf die Patenterteilung: **16.10.2024**
(21) Anmeldenummer: 20816098.6
(22) Anmeldetag: 10.11.2020
(51) Int. Cl.: B61C 17/06, H01M 10/42, H01M 50/249, H05K 7/16, B60L 50/60, H01M 50/256, H01M 50/262, B60L 53/80, B60R 16/04, H01M 50/207, H01M 50/244, B60L 50/64

(54) **BATTERIETROG FÜR EIN SCHIENENFAHRZEUG**
BATTERY RECEPTACLE FOR A RAIL VEHICLE
RÉCEPTACLE DE BATTERIE POUR VÉHICULE FERROVIAIRE

(30) Priorität: 21.11.2019 DE 102019217975
(43) Veröffentlichungstag der Anmeldung: 10.08.2022
(73) Patentinhaber: Siemens Mobility GmbH, 81739 München (DE)
(72) Erfinder: HINTERMEIR, Stefan, 83229 Aschau I. Ch (DE)
(74) Vertreter: Siemens Patent Attorneys
(86) Internationale Anmeldenummer: PCT/EP2020/081574
(87) Internationale Veröffentlichungsnummer: WO 2021/099176

(56) Entgegenhaltungen:
- CN-U- 206 789 598
- CN-U- 207 021 322
- JP-A- 2017 098 031
- US-A- 5 275 525
- US-A1- 2015 071 747

## Beschreibung

Die Erfindung betrifft einen Batterietrog für ein Schienenfahrzeug sowie ein Schienenfahrzeug mit einem Batterietrog.

Schienenfahrzeuge sind mit einem elektrischen Bordnetzsystem ausgestattet, das beim Ausfall einer primären Energiequelle auch von Batterien jeglicher Bauart gespeist werden soll.

Diese Batterien werden im Schienenfahrzeug entweder unterflur oder im Schienenfahrzeug verstaut. Die Stauräume für die Batterien werden Batteriekästen genannt.

Die Batterien von Schienenfahrzeugen bestehen üblicherweise aus mehreren Batteriezellen, die in einem Batterietrog angeordnet und dort miteinander verbunden bzw. verschaltet sind. Üblicherweise werden die Batteriezellen in Reihe geschaltet, wobei die Batteriezellen üblicherweise eine gleiche Bauform sowie eine gleiche elektrische Leistung aufweisen.

Die Batteriezellen des Batterietrogs werden üblicherweise auf ihrer Oberseite miteinander verkabelt. Die Gesamtspannung eines Batterietrogs ergibt sich im Allgemeinen aus der Summe der Batteriezellen multipliziert mit der Spannung einer einzelnen Batteriezelle.

Batterien von Schienenfahrzeugen müssen gewartet werden. Dies setzt eine gute Zugänglichkeit zu den Batterietrögen und auch zu den Batteriezellen voraus. Stand der Technik ist es daher, dass der zugehörige Batteriekasten an einer gut zugänglichen Schienenfahrzeug-Stelle angeordnet ist.

Beispielsweise kommt hier der Unterflurbereich des Schienenfahrzeugs in Betracht, in dem die Batteriekästen am Schienenfahrzeug montiert sind.

Ein derartiger Batteriekasten ist beispielsweise mit Teleskopschienen ausgestattet, mit deren Hilfe ein im Batteriekasten angeordneter Batterietrog translatorisch geradlinig aus dem Batteriekasten herausgefahren werden kann.

In der ausgefahrenen Stellung des Batterietroges werden Wartungsarbeiten an den Batteriezellen durchgeführt - beispielsweise wird in dieser Stellung bzw. Position das Batteriewasser nachgefüllt.

Der Umstand, dass die Batteriezellen in einem Batterietrog translatorisch geradlinig in den und aus dem Batteriekasten bewegt werden, bewirkt, dass die Batteriekästen eine quaderförmige Gestalt bzw. Grundform haben.

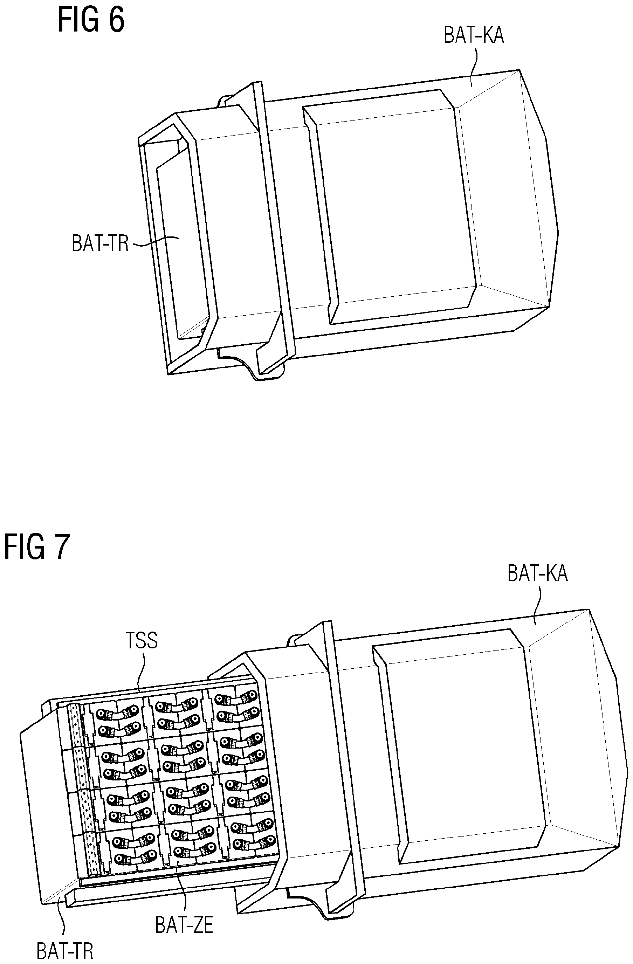

FIG 6 und FIG 7 zeigen diesen Zusammenhang an zwei Positionen bzw. Stellungen eines Batterietrogs BAT-TR in Bezug zum zugehörigen Batteriekasten BAT-KA.

FIG 6 zeigt den Batterietrog BAT-TR, der vollständig in den zugeordneten Batteriekasten BAT-KA eingefahren ist.

FIG 7 zeigt den Batterietrog BAT-TR, der aus dem zugeordneten Batteriekasten BAT-KA ausgefahren ist.

Zum Ausfahren des Batterietrogs BAT-TR sind Teleskopschienen TSS vorgesehen, die den Batterietrog BAT-TR mit dem Batteriekasten BAT-KA verbinden. Mit Hilfe der Teleskopschienen TSS wird die oben beschriebene translatorische Bewegung des Batterietrogs BAT-TR im Bezug zum Batteriekasten BAT-KA ermöglicht. Der Einsatz von Teleskopschienen gibt eine quaderförmige Geometrie des Batteriekastens vor.

Der Batterietrog BAT-TR beinhaltet eine Anzahl an Batteriezellen BAT-ZE, die an ihrer Oberseite elektrisch miteinander verbunden sind.

Das Dokument CN 206789598 U offenbart einen Batterietrog für ein Schienenfahrzeug, mit einer Volumenform, die eine Quaderform hat, mit einem Kasten, mit Verbindungsmitteln, die derart ausgebildet sind, dass der Batterietrog linear mit dem zugeordneten Batteriekasten des Schienenfahrzeugs verbindbar ist und dass die Form des Batteriekastens ähnlich bzw. gleich zur Quaderform des Batterietrogs ist, so dass der Batterietrog vom Batteriekasten vollständig aufgenommen wird, ohne dabei vorhandenes Volumen ungenutzt zu lassen.

Das Dokument US 2015/071747 A offenbart ein Werkbaufahrzeug mit einem Batterietrog mit zugehörigem Batteriekasten, mit einer Volumenform des Batterietrogs, die von einer Quaderform abweicht, mit Verbindungsmitteln, die derart ausgebildet sind, dass der Batterietrog drehbar mit dem zugeordneten Batteriekasten des Bergbaufahrzeugs verbunden ist, so dass durch eine um eine Achse erfolgende Drehung der Batterietrog in den Batteriekasten drehbar ist bzw. aus dem Batteriekasten herausdrehbar ist.

Batteriezellen für Schienenfahrzeuge sind sehr schwer, so dass die Montage eines mit Batteriezellen befüllten Batterietrogs mit Hebegeräten oder Hubgeräten erfolgen muss. Entsprechend werden Batterietröge mit quaderförmiger Gestalt, die für entsprechende quaderförmige Batteriekästen vorgesehen sind, mit Aufnahmen für Gabelzinken bzw. Staplerzinken oder anderen Hubgeräten ausgestattet. Die Montage der Batterietröge erfolgt dann mit Hilfe eines Gabelstaplers oder mit Hilfe ähnlicher Gerätschaften.

Zusammengefasst ermöglicht die quaderförmige Gestalt von Batteriekasten und Batterietrog in Verbindung mit der Zinkenförmigen Aufnahme am Batterietrog eine erleichterte Montage bzw. Demontage.

Nachteilig ist, dass man auf diese konkrete Bauform bzw. Gestalt beim Entwurf von Schienenfahrzeugen eingeschränkt ist. Es ist daher die Aufgabe der vorliegenden Erfindung, einen Batterietrog mit zugehörigem Batteriekasten derart zu gestalten, dass die oben genannte Einschränkung überwunden wird und gleichzeitig eine einfache Wartung der Batteriezellen des Batterietrogs ermöglicht wird.

Diese Aufgabe wird durch die Merkmale des Anspruchs 1 und des Anspruchs 8 gelöst.

Vorteilhafte Weiterbildungen sind in den jeweiligen abhängigen Ansprüchen angegeben.

Die Erfindung betrifft einen Batterietrog für ein Schienenfahrzeug mit zugehörigem Batteriekasten. Der Batterietrog weist dabei eine Volumenform auf, die von einer Quaderform abweicht. Der Batterietrog weist Verbindungsmittel auf, die derart ausgebildet sind, dass der Batterietrog drehbar mit dem zugeordneten Batteriekasten des Schienenfahrzeugs verbunden ist, so dass durch eine um eine Achse erfolgende Drehung der Batterietrog in den Batteriekasten drehbar ist bzw. aus dem Batteriekasten herausdrehbar ist.

Die Form des Batteriekastens ist ähnlich bzw. gleich zur Form des Batterietrogs, so dass der Batterietrog vom Batteriekasten vollständig aufgenommen wird, ohne dabei vorhandenes Volumen ungenutzt zu lassen.

In einer bevorzugten Ausgestaltung weist der Batterietrog ein Volumen auf, das durch eine Grundfläche und durch zugehörige Seitenflächen bestimmt ist, wobei die Grundfläche dreieckig-ähnlich ist oder ein Dreieck ist oder trapez-ähnlich ist oder ein Trapez ist und wobei die zugehörigen Seitenflächen im Wesentlichen senkrecht zur Grundfläche sind.

In einer bevorzugten Ausgestaltung beinhaltet der Batterietrog Batteriezellen, die elektrisch miteinander verbunden im Batterietrog angeordnet sind.

In einer bevorzugten Ausgestaltung weist der Batterietrog einer Anhebe-Baugruppe auf, die für eine vertikale Bewegung des Batterietrogs ausgebildet und mit diesem verbunden ist, wobei die Anhebe-Baugruppe dazu ausgebildet ist, den Batterietrog samt den darin befindlichen Batteriezellen mittels Hub- bzw. Hebegeräten zu bewegen.

In einer bevorzugten Ausgestaltung weist die Anhebe-Baugruppe eine Kranöse auf, die dazu ausgebildet ist, den Batterietrog samt den darin befindlichen Batteriezellen mittels Hub- bzw. Hebegeräten zu bewegen.

In einer bevorzugten Ausgestaltung ist die Kranöse senkrecht über dem Schwerpunkt des Batterietrogs bzw. über dem Schwerpunkt des mit Batteriezellen befüllten Batterietrogs angeordnet.

In einer bevorzugten Ausgestaltung weist der Batterietrog eine Scharnierhälfte als Verbindungsmittel auf.

Ein Schienenfahrzeug weist in einer bevorzugten Ausgestaltung einen wie vorstehend beschriebenen Batterietrog und einen Batteriekasten auf. Der Batterietrog ist über Verbindungsmittel derart drehbar mit dem Batteriekasten des Schienenfahrzeugs verbunden, dass durch eine um eine Achse erfolgende Drehung der Batterietrog in den Batteriekasten drehbar ist bzw. aus dem Batteriekasten herausdrehbar ist.

In einer bevorzugten Ausgestaltung umfassen die Verbindungsmittel folgende Elemente:
- eine Scharnierhälfte, die mit dem Batterietrog verbunden ist,
- eine Scharnierachse und einen Scharnierachsenhalter, wobei die Scharnierachse über den Scharnierachsenhalter mit dem Batteriekasten verbunden ist.

Die Scharnierhälfte greift im montierten Zustand in die Scharnierachse ein, wobei die Scharnierhälfte nach erfolgtem Eingriff in die Scharnierachse mit einer losen Scharnierhälfte verbunden wird.

Die Form des Batteriekastens ist ähnlich bzw. gleich zur Form des Batterietrogs, so dass der Batterietrog vom Batteriekasten vollständig aufgenommen wird, ohne dabei vorhandenes Volumen ungenutzt zu lassen.

Die Erfindung ermöglicht, dass Batteriezellen in Batterietrögen angeordnet werden, deren Form nicht länger auf die bislang übliche Batterietrog-Quaderform beschränkt ist.

Damit werden vorhandene, bislang ungenutzte Volumen beliebiger Form im Schienenfahrzeug zur Aufnahme von Batteriekästen nutzbar gemacht.

Die Erfindung ermöglicht, dass trotz dem hohen Gewicht der Baugruppe "Batterietrog mit Batteriezellen" diese mit Hilfe von Hebe- oder Hubgeräten montierbar ist.

Die Erfindung ermöglicht, dass Wartungsarbeiten am Batterietrog bzw. an den darin angeordneten Batteriezellen mit geringem Aufwand durchführbar sind.

Insbesondere wird zum Herausdrehen des Batterietrogs kein schweres Gerät (z.B. Flurförderfahrzeug oder Gabelstapler) benötigt.

Die Erfindung ermöglicht den freien und einfachen Zugriff bzw. Zugang zu den Batteriezellen des Batterietrogs.

Die Erfindung ermöglicht eine kompakte Bauweise der Batterietröge bzw. der Batterietrogmodule.

Die Erfindung ermöglicht eine Integration von mehreren Batterietrögen in einem Batteriekasten. Die Batterietröge sind bevorzugt vertikal übereinander im Batteriekasten angeordnet.

Nachfolgend wird die vorliegende Erfindung beispielhaft anhand einer Zeichnung näher erläutert. Dabei zeigt:

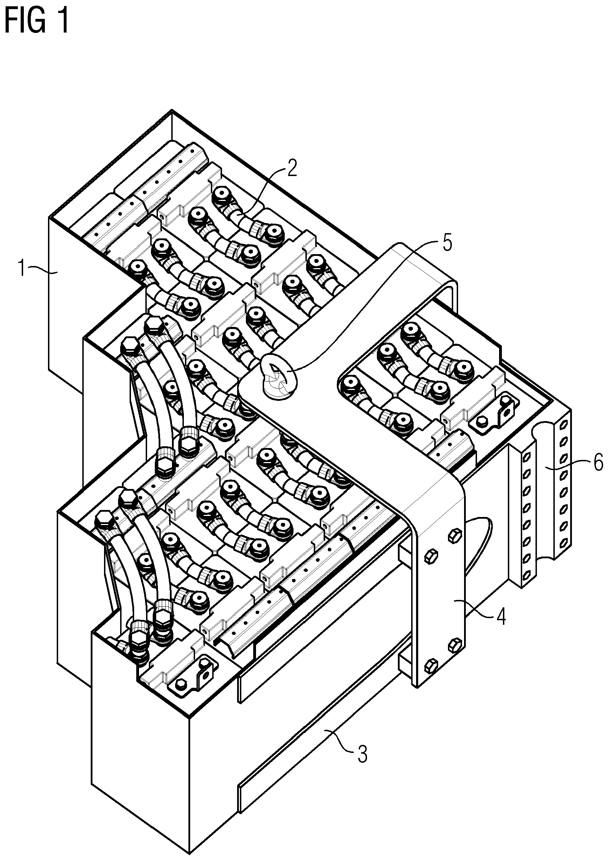

- FIG 1: ein Ausführungsbeispiel eines erfindungsgemäßen Batterietrogs,

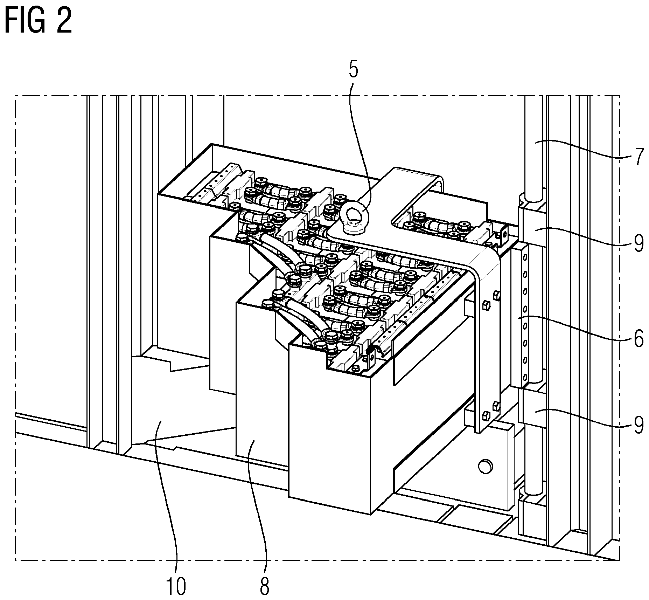

- FIG 2: mit Bezug auf FIG 1 eine Positionierung des Batterietrogs in einem Batteriekasten eines Schienenfahrzeugs,

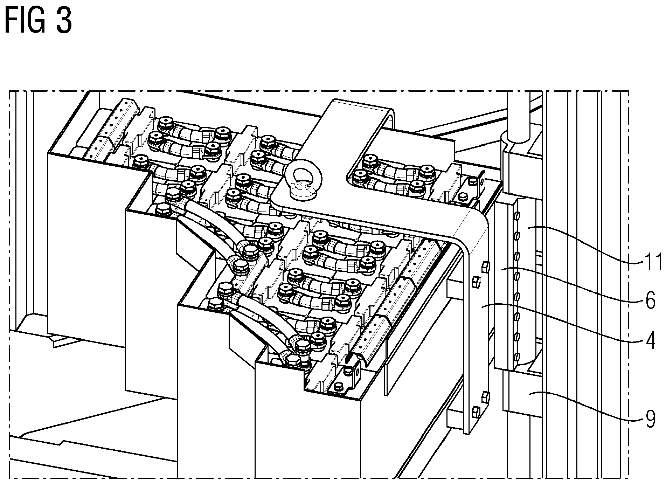

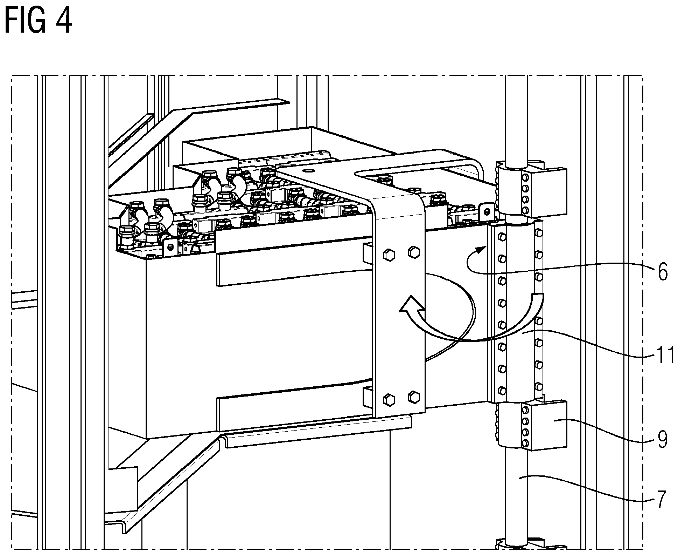

- FIG 3: und FIG 4 zeigen mit Bezug auf FIG 1 und FIG 2 Details einer Verschraubung eines Batterietrogs im Batteriekasten,

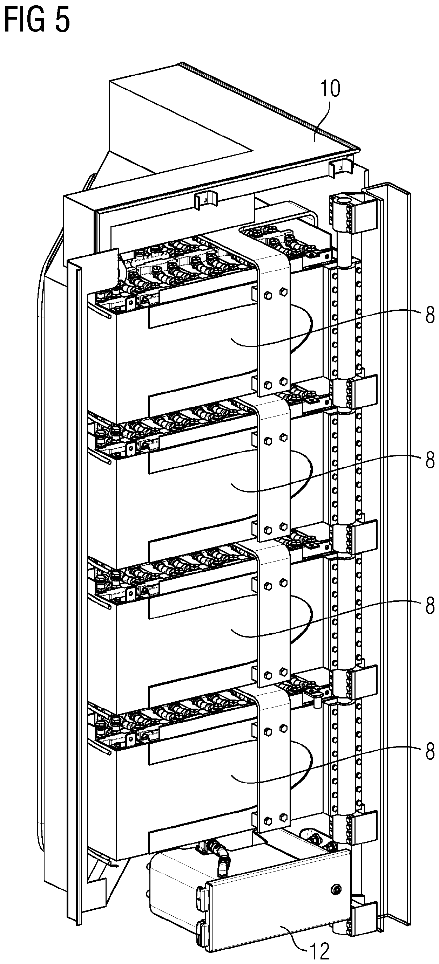

- FIG 5: mit Bezug auf FIG 1 bis FIG 4 einen komplett bestückten Batteriekasten,
- FIG 6: und FIG 7 den in der Einleitung beschriebenen Batterietrog mit zugehörigen Batteriekasten des Stands der Technik.

FIG 1 zeigt ein Ausführungsbeispiel eines erfindungsgemäßen Batterietrogs 1.

Der Batterietrog 1 weist eine dreieck-ähnliche Grundfläche auf, die sich gleichmäßig in vertikaler Richtung nach oben fortsetzt.

Der Batterietrogs 1 beinhaltet dabei eine Anzahl miteinander verschalteter Batteriezellen 2, die bevorzugt eine gleiche Bauform aufweisen.

Der Batterietrog 1 ist aus Stabilitätsgründen bevorzugt aus Stahl gefertigt.

Der Batterietrog 1 weist außerdem Versteifungen 3, eine Anhebe-Baugruppe 4, eine Kranöse 5 sowie eine Scharnierhälfte 6 auf, deren Funktion nachfolgend beschrieben wird.

Mit Hilfe der Anhebe-Baugruppe 4 sowie mit Hilfe der Kranöse 5 kann der Batterietrog 1 samt der vormontierten Batteriezellen 2 mit Hub- bzw. Hebegeräten bewegt werden.

Die Kranöse ist dabei bevorzugt über dem Schwerpunkt des mit Batteriezellen 2 befüllten Batterietrogs 1 angeordnet, um dessen Bewegung bei Montage, Demontage bzw. bei durchzuführenden Wartungsarbeiten an den Batteriezellen zu vereinfachen.

FIG 2 zeigt mit Bezug auf FIG 1 eine Positionierung des Batterietrogs 1 in einem Batteriekasten 10 eines Schienenfahrzeugs.

Die Scharnierhälfte 6 des Batterietrogs 1 greift im montierten Zustand in eine Scharnierachse 7 ein. Die Scharnierachse 7 ist - wie nachfolgend beschrieben - unter Mitwirkung von Scharnierachsenhalter 9 mit dem Batteriekasten 10 verbunden.

Ein sogenanntes Batterietrogmodul 8, das nachfolgend näher beschrieben wird, wird zumindest aus dem Batterietrog 1, aus den Batteriezellen 2, aus der Scharnierhälfte 6 und aus den Versteifungen 3 gebildet.

Das Batterietrogmodul 8 kann zusätzlich auch die Anhebe-Baugruppe 4 sowie die Kranöse 5 umfassen - wobei diese jedoch auch wahlweise vom Batterietrogmodul 8 separierbar bzw. trennbar ausgeführt sein können.

Das Batterietrogmodul 8 wird mittels der Scharnierhälfte 6 an der Scharnierachse 7 positioniert. Die Verbindung entsteht mit dem Aufschrauben einer nachfolgend beschriebenen losen Scharnierhälfte (vgl. hierzu in FIG 3 die lose Scharnierhälfte 11).

Über die Scharnierhälfte 6, die Scharnierachse 7, den Scharbierachsenhalter 9 sowie über die lose Scharnierhälfte (vgl. hierzu in FIG 3 die lose Scharnierhälfte 11) ist der Batterietrog 1 drehbar mit dem Batteriekasten 10 verbunden. Damit kann der Batterietrog 1 in den Batteriekasten 10 gedreht werden bzw. kann der Batterietrog 1 aus dem Batteriekasten 10 herausgedreht werden.

Die oben beschriebenen Versteifungen 3 sind derart ausgestaltet, dass Kräfte sowohl von den zusammenwirkenden Scharnierhälften 6, 7 als auch von der Anhebe-Baugruppe 4 in den Batterietrog 1 spannungsoptimiert übergeben werden.

Der Batterietrog 1 mit den in FIG 1 beschriebenen Elementen wird mit Hub- oder Hebegeräten an der Kranöse 5 angehoben und in den Batteriekasten 10 moniert.

Der Batterietrog 1 ist aus Stabilitätsgründen bevorzugt aus Stahl gefertigt.

FIG 3 und FIG 4 zeigen mit Bezug auf FIG 1 und FIG 2 Details einer Verschraubung eines Batterietrogmoduls 8 im Batteriekasten 10.

Am Schienenfahrzeug befinden sich die folgende Baugruppen: die Scharnierachse 7 mit Scharnierachsenhaltern 9 und der Batteriekasten 10, der den Batterietrog 8 im fertig montierten Zustand bzw. im Betriebszustand des Schienenfahrzeugs vor äußeren Einflüssen schützt.

Das Batterietrogmodul 8 ist so konzipiert, dass das Batterietrogmodul 8 hängend an der Kranöse 5 derart an den Batteriekasten 10 angenähert werden kann, dass die Scharnierhälfte 6 an die im Fahrzeug befindliche Scharnierachse 7 eingreift.

Die Scharnierachse 7 kann permanent mit dem Schienenfahrzeug verbunden sein oder, wie in diesem Beispiel, demontierbar bzw. montierbar ausgeführt sein.

Eine demontierbar bzw. montierbar ausgeführte Scharnierachse 7 hat den Vorteil, dass zusätzliche Lagerelemente (hier nicht dargestellt) zum einfacheren Drehen der Batterietrogmoduls 8 eingesetzt werden können.

Ist das Batterietrogmodul 8 so positioniert, dass die Scharnierhälfte 6 in die Scharnierachse 7 eingreift, dann wird die Scharnierhälfte 6 mit einer losen Scharnierhälfte 11 verbunden - in diesem Beispiel verschraubt.

Die verbundenen Scharnierhälften 6 und 11 bilden eine Bohrung, in der sich die Scharnierachse 7 befindet.

Das Batterietrogmodul 8 ist dann um das Scharnier, das aus den Scharnierhälften 6, 11 und aus der Scharnierachse 7 besteht, gedreht werden.

Um diese Drehung zu ermöglichen, muss eine Spielpassung zwischen der Scharnierachse 7 und der Bohrung, die aus den Scharnierhälften 6 und 11 entsteht, vorgesehen sein.

Um die Drehung des Batterietrogmoduls 8 zusätzlich zu erleichtern, sind die "Bohrungsinnenseiten" der Scharnierhälften 6 und 11 mit reibungsarmen Materialien ausgestattet.

Sind die beiden Scharnierhälften 6 und 11 verbunden, wird das Batterietrogmodul 8 langsam abgesenkt. Das Batterietrogmodul 8 gleitet an der Scharnierachse 7 nach unten, bis die beiden Scharnierhälften 6 und 11 auf dem unteren der beiden Scharnierachsenhalter 9 aufliegen.

Der untere der beiden Scharnierachsenhalter 9 nimmt die komplette Gewichtskraft des Batterietrogmoduls 8 auf.

Um die Drehung des Batterietrogmoduls 8 um die Scharnierachse 7 weiter zu erleichtern, kann zwischen den Scharnierhälften 6 und 11 und dem unteren Scharnierachsenhalter 9 eine reibungsvermindernde Zwischenlage (hier nicht dargestellt) eingebracht werden.

Ebenso wäre an dieser Stelle ein Lager (hier nicht dargestellt) einsetzbar.

Ebenso könnten die Kontaktflächen zwischen den Scharnierhälften 6 und 11 und dem unteren Scharnierachsenhalter 9 reibungsarm konzipiert werden. Dies wird bevorzugt über Beschichtungen oder Einsätze realisiert.

Sobald das Batterietrogmodul 8 vollständig auf dem Scharnierachsenhalter 9 aufliegt, wird das Hubmittel bzw. Hebemittel entfernt.

Bedarfsweise kann auch die Anhebe-Baugruppe 4 samt Kranöse 5 entfernt werden oder sie verbleibt zur späteren Verwendung am Batterietrog 1.

Das Batterietrogmodul 8 wird dann in den Batteriekasten 10 eingedreht, dort fixiert und verkabelt - vergleiche hierzu FIG 5.

FIG 5 zeigt mit Bezug auf die Figuren FIG 1 bis FIG 4 einen komplett bestückten Batteriekasten 10, der mehrere übereinander angeordnete Batterietrogmodule 8 beinhaltet.

Nachdem ein erstes Batterietrogmodul 8 montiert wurde, werden weitere Batterietrogmodule 8 auf die oben beschriebene Art und Weise in den Batteriekasten 10 eingebaut bzw. geschwenkt.

FIG 5 zeigt im unteren Bereich des Batteriekastens 10 einen Bereich 12, der für Sicherungen vorgesehen ist.

## Patentansprüche

1. Batterietrog (1) mit zugehörigem Batteriekasten (10) für ein Schienenfahrzeug,
- mit einer Volumenform des Batterietrogs, die von einer Quaderform abweicht,
- mit Verbindungsmitteln (6) des Batterietrogs, die derart ausgebildet sind, dass der Batterietrog (1) drehbar mit dem zugeordneten Batteriekasten (10) des Schienenfahrzeugs verbunden ist, so dass durch eine um eine Achse erfolgende Drehung der Batterietrog (1) in den Batteriekasten (10) drehbar ist bzw. aus dem Batteriekasten (10) herausdrehbar ist,
- mit einer Form des Batteriekastens, die ähnlich oder gleich zur Form des Batterietrogs ist, so dass der Batterietrog vom Batteriekasten vollständig aufgenommen wird, ohne dabei vorhandenes Volumen ungenutzt zu lassen.

2. Batterietrog (1) nach Anspruch 1, mit einem Volumen, das durch eine Grundfläche und durch zugehörige Seitenflächen bestimmt ist, wobei die Grundfläche dreieckig-ähnlich ist oder ein Dreieck ist oder trapez-ähnlich ist oder ein Trapez ist und wobei die zugehörigen Seitenflächen im Wesentlichen senkrecht zur Grundfläche sind.

3. Batterietrog (1) nach Anspruch 1 oder 2, mit Batteriezellen (2), die elektrisch miteinander verbunden im Batterietrog (1) angeordnet sind.

4. Batterietrog (1) nach Anspruch 1, mit einer Anhebe-Baugruppe (4), die für eine vertikale Bewegung des Batterietrogs (1) ausgebildet und mit diesem verbunden ist, wobei die Anhebe-Baugruppe (4) dazu ausgebildet ist, den Batterietrog (1) samt den darin befindlichen Batteriezellen (2) mittels Hub- bzw. Hebegeräten zu bewegen.

5. Batterietrog nach Anspruch 4, bei der die Anhebe-Baugruppe (4) eine Kranöse (5) aufweist, die dazu ausgebildet ist, den Batterietrog (1) samt den darin befindlichen Batteriezellen (2) mittels Hub- bzw. Hebegeräten zu bewegen.

6. Batterietrog nach Anspruch 5, bei der die Kranöse (5) senkrecht über dem Schwerpunkt des mit Batteriezellen (4) befüllten Batterietrogs (1) angeordnet ist.

7. Batterietrog nach Anspruch 1, mit einer Scharnierhälfte (6) als Verbindungsmittel (6).

8. Schienenfahrzeug mit einem Batterietrog (1) und mit einem zugehörigen Batteriekasten (10),
- bei dem der Batterietrog (1) mit dem zugehörigen Batteriekasten (10) nach einem der vorhergehenden Ansprüche ausgebildet ist,
- bei dem der Batterietrog (1) über die Verbindungsmittel (6) derart drehbar mit dem Batteriekasten (10) des Schienenfahrzeugs verbunden ist, dass durch eine um eine Achse erfolgende Drehung der Batterietrog (1) in den Batteriekasten (10) drehbar ist bzw. aus dem Batteriekasten (10) herausdrehbar ist.

9. Schienenfahrzeug nach Anspruch 8, bei dem die Verbindungsmittel folgende Elemente umfassen:
- eine Scharnierhälfte (6), die mit dem Batterietrog (1) verbunden ist,
- eine Scharnierachse (7) und Scharnierachsenhalter (9), wobei die Scharnierachse (7) über einen Scharnierachsenhalter (9) mit dem Batteriekasten (10) verbunden ist,
- wobei die Scharnierhälfte (6) im montierten Zustand in die Scharnierachse (7) eingreift, und
- wobei die Scharnierhälfte (6) nach erfolgtem Eingriff in die Scharnierachse (7) mit einer losen Scharnierhälfte (11) verbunden ist.

## Claims

1. Battery receptacle (1) with associated battery box (10) for a rail vehicle,
- with a volume shape of the battery receptacle that differs from a cuboidal shape,
- with connecting means (6) of the battery receptacle that are formed in such a way that the battery receptacle (1) is connected in a rotatable manner to the associated battery box (10) of the rail vehicle such that, by way of a rotation performed about an axis, the battery receptacle (1) is able to be rotated into the battery box (10) and to be rotated out of the battery box (10),
- with a shape of the battery box that is similar or identical to the shape of the battery receptacle, such that the battery receptacle is accommodated completely by the battery box without any volume being left unused.

2. Battery receptacle (1) according to Claim 1, with a volume which is determined by a base and by associated lateral faces, wherein the base is similar to or is a triangle or is similar to or is a trapezium, and wherein the associated lateral faces are substantially perpendicular to the base.

3. Battery receptacle (1) according to Claim 1 or 2, with battery cells (2) which are arranged in the battery receptacle (1) so as to be connected electrically to one another.

4. Battery receptacle (1) according to Claim 1, with a lifting assembly (4) which is designed for a vertical movement of the battery receptacle (1) and is connected thereto, wherein the lifting assembly (4) is designed to move the battery receptacle (1), together with the battery cells (2) situated therein, by means of lifting or hoisting equipment.

5. Battery receptacle according to Claim 4, in which the lifting assembly (4) has a lifting eye (5) which is designed to move the battery receptacle (1), together with the battery cells (2) situated therein, by means of lifting or hoisting equipment.

6. Battery receptacle according to Claim 5, in which the lifting eye (5) is arranged vertically above the centre of gravity of the battery receptacle (1) filled with battery cells (4).

7. Battery receptacle according to Claim 1, with a hinge half (6) as connecting means (6).

8. Rail vehicle with a battery receptacle (1) and with an associated battery box (10),
- in which the battery receptacle (1) with the associated battery box (10) is designed according to one of the preceding claims,
- in which the battery receptacle (1), via the connecting means (6), is connected in a rotatable manner to the battery box (10) of the rail vehicle in such a way that, by way of a rotation performed about an axis, the battery receptacle (1) is able to be rotated into the battery box (10) and to be rotated out of the battery box (10).

9. Rail vehicle according to Claim 8, in which the connecting means comprise the following elements:
- a hinge half (6) which is connected to the battery receptacle (1),
- a hinge pin (7) and hinge-pin holders (9), wherein the hinge pin (7) is connected to the battery box (10) via a hinge-pin holder (9),
- wherein, in the fitted state, the hinge half (6) engages with the hinge pin (7), and
- wherein, after being brought into engagement with the hinge pin (7), the hinge half (6) is connected to a loose hinge half (11).

## Revendications

1. Réceptacle de batterie (1) avec boîtier de batterie (10) associé pour un véhicule ferroviaire,
- dans lequel la forme volumique du réceptacle de batterie s'écarte d'une forme parallélépipédique,
- comportant des moyens de raccordement (6) du réceptacle de batterie conformés de manière que le réceptacle de batterie (1) puisse être raccordé par pivotement au boîtier de batterie (10) associé du véhicule ferroviaire de sorte que par suite d'une rotation autour d'un axe, le réceptacle de batterie (1) puisse être introduit par rotation dans le boîtier de batterie (10) ou sorti par rotation hors du boîtier de batterie (10),
- dans lequel la forme du boîtier de batterie est semblable ou identique à la forme du réceptacle de batterie, de manière que le réceptacle de batterie est repris entièrement par le boîtier de batterie sans laisser d'espace inutilisé.

2. Réceptacle de batterie (1) selon la revendication 1, comportant un volume déterminé par une surface de base et par des surfaces latérales associées, la surface de base étant soit un triangle ou analogue à un triangle soit un trapèze ou analogue à un trapèze, les surfaces latérales associées étant sensiblement perpendiculaires à la surface de base.

3. Réceptacle de batterie (1) selon la revendication 1 ou 2, comportant des cellules de batterie (2) disposées dans le réceptacle de batterie (1) tout en étant reliées électriquement entre elles.

4. Réceptacle de batterie (1) selon la revendication 1, comportant un ensemble de levage (4) conçu pour déplacer verticalement le réceptacle de batterie (1) et relié à ce dernier, l'ensemble de levage (4) étant conçu pour déplacer le réceptacle de batterie (1) ensemble avec les cellules de batterie (2) disposées au sein de celui-ci à l'aide d'appareils de levage.

5. Réceptacle de batterie selon la revendication 4, dans lequel l'ensemble de levage (4) comporte un œillet de grue (5) conçu pour déplacer le réceptacle de batterie (1) ensemble avec les cellules de batterie (2) disposées au sein de celui-ci à l'aide d'appareils de levage.

6. Réceptacle de batterie selon la revendication 5, dans lequel l'œillet de grue (5) est disposé verticalement au-dessus du centre de gravité du réceptacle de batterie (1) rempli par des cellules de batterie (4).

7. Réceptacle de batterie selon la revendication 1, dans lequel une demi-articulation (6) sert de moyen de raccordement (6).

8. Véhicule ferroviaire comportant un réceptacle de batterie (1) et un boîtier de batterie (10) associé,
- dans lequel le réceptacle de batterie (1) et le boîtier de batterie (10) associé sont configurés conformément à l'une des revendications précédentes,
- dans lequel, grâce aux moyens de raccordement (6), le réceptacle de batterie (1) est relié de manière pivotante au boîtier de batterie (10) du véhicule ferroviaire de sorte que par suite d'une rotation du réceptacle de batterie (1) autour d'un axe, ce dernier peut être introduit par rotation dans le boîtier de batterie (10) ou sorti par rotation hors du boîtier de batterie (10).

9. Véhicule ferroviaire selon la revendication 8, dans lequel les moyens de raccordement comportent les éléments suivants :
- une demi-articulation (6) qui est reliée au réceptacle de batterie (1),
- un axe d'articulation (7) et des supports d'axe d'articulation (9), l'axe d'articulation (7) étant relié au boîtier de batterie (10) par l'intermédiaire d'un support d'axe d'articulation (9),
- la demi-articulation (6) prenant, en état monté, dans l'axe d'articulation (7), et
- la demi-articulation (6) est reliée, par suite de sa prise dans l'axe d'articulation (7), à une demi-articulation lâche (11).
